# EUROPEAN PATENT APPLICATION

(11) **EP 2 711 842 A2**
(43) Date of publication of application: **26.03.2014**
(21) Application number: 13004416.7
(22) Date of filing: 11.09.2013
(51) Int. Cl.: G06F 13/38

(54) **Interface between a host and a peripheral device**

(30) Priority: 24.09.2012 US 201261705126 P; 15.01.2013 US 201361752574 P; 23.01.2013 US 201313747615
(71) Applicant: Broadcom Corporation, Irvine, CA 92617 (US)
(72) Inventor: Ma, Kenneth, Cuprtino, CA 95014 (US)
(74) Representative: Jehle, Volker Armin

(57) **Abstract**

Disclosed are various embodiments for an interface between a host device and one or more peripheral devices in a computing system. A peripheral-side controller, a host-side controller, and a peripheral-side translator are located on a peripheral device that is in communication with a host device. The peripheral-side translator transfers data from an internal bus in the peripheral device to an external interface for the peripheral device. The internal bus is associated with a first bus protocol, and the external interface is associated with a second bus protocol.

## Description

### CROSS-REFERENCE TO RELATED CASES

This application claims priority to U.S. Provisional Patent Application 61/705,126, titled "VIRTUAL FABRIC EXTENDER" and filed on September 24, 2012, which is incorporated by reference herein in its entirety. This application also claims priority to U.S. Provisional Patent Application 61/752,574, titled "INTERFACE BETWEEN A HOST AND A PERIPHERAL DEVICE" and filed on January 15, 2013, which is incorporated by reference herein in its entirety.

### BACKGROUND

A system on a chip (SoC) may include a memory that stores various types of data. The SoC may also comprise an internal bus fabric that facilitates communication between the memory, other components in the SoC, and peripheral devices that are external to the SoC.

### BRIEF SUMMARY OF THE INVENTION

According to an aspect, a system comprises:
a host device comprising:
   a bus fabric associated with a first bus protocol; and
   a host-side translator in communication with the bus fabric, the host-side translator configured to provide data from the bus fabric to an external interface for the host device, the external interface being associated with a second bus protocol; and
a peripheral device comprising:
   a peripheral-side translator in communication with the external interface, the peripheral-side translator configured to provide data from the external interface to an internal bus in the peripheral device, the internal bus being associated with a third bus protocol; and
   a host-side controller configured to obtain data from the internal bus.

Advantageously, the peripheral device further comprises a peripheral-side controller for the peripheral device, the peripheral-side controller being in communication with the host-side controller.

Advantageously:
the host-side translator is configured to convert the data from being in accordance with the first bus protocol to being in accordance with the second bus protocol; and
the peripheral-side translator is configured to convert the data from being in accordance with the second bus protocol to being in accordance with the third bus protocol.

Advantageously:
the host device comprises an additional host-side translator in communication with the bus fabric, the additional host-side translator configured to provide data to an additional external interface for the host device, the additional external interface being associated with the second bus protocol; and
the system comprises an additional peripheral device comprising:
   an additional peripheral-side translator in communication with the additional external interface, the additional peripheral-side translator configured to provide data from the additional external interface to an additional internal bus in the additional peripheral device.

Advantageously, the external interface comprises a plurality of configurable lanes.

Advantageously, the host device is located on a first chip and the peripheral device is located on a second chip.

Advantageously, the first bus protocol and the third bus protocol are the same.

Advantageously, the first bus protocol and the third bus protocol are different.

Advantageously, the second bus protocol is based at least in part on a MIPI Low Latency Interface (LLI) protocol, a Peripheral Component Interconnect (PCI) protocol, or any combination thereof.

According to an aspect, a method comprises:
transferring, using a host device, data from a bus fabric in the host device to an external interface for the host device, the bus fabric being associated with a first bus protocol, the external interface being associated with a second bus protocol;
transferring, using a peripheral device, data from the external interface to an internal bus for the peripheral device, the internal bus being associated with a third bus protocol; and
transferring, in the peripheral device, data from the internal bus to a host-side controller that is located in the peripheral device.

Advantageously, the method further comprises translating, in the host device, data from being in accordance with the first bus protocol to being in accordance with the second bus protocol.

Advantageously, the method further comprises translating, in the peripheral device, data from being in accordance with the second bus protocol to being in accordance with the third bus protocol.

Advantageously, the method further comprises communicating with the host-side controller using a peripheral-side controller that is located in the peripheral device.

Advantageously, the first bus protocol and the third bus protocol are different from the second bus protocol.

Advantageously, the second bus protocol is based at least in part on a MIPI Low Latency Interface (LLI) bus protocol.

Advantageously, the second bus protocol is based at least in part on a Peripheral Component Interconnect (PCI) bus protocol.

According to an aspect, an apparatus comprises:
a peripheral-side controller;
a host-side controller in communication with the peripheral-side controller;
an internal bus in communication with the host-side controller, the internal bus being associated with a first bus protocol; and
a peripheral-side translator configured to transfer data from the internal bus to an external interface, the external interface being associated with a second bus protocol.

Advantageously, the peripheral-side controller and the host-side controller are on a same chip.

Advantageously, the second bus protocol is based at least in part on a MIPI Low Latency Interface (LLI).

Advantageously, the second bus protocol is based at least in part on a MIPI Low Latency Interface (LLI) or a Peripheral Component Interconnect (PCI) protocol.

### BRIEF DESCRIPTION OF THE DRAWINGS

Many aspects of the present disclosure can be better understood with reference to the following drawings. The components in the drawings are not necessarily drawn to scale, emphasis instead being placed upon clearly illustrating the principles of the disclosure. Moreover, in the drawings, like reference numerals designate corresponding parts throughout the several views.

FIG. 1 is a drawing of an example of a first computing system according to various embodiments of the present disclosure.

FIG. 2 is a drawing of an example of a second computing system according to various embodiments of the present disclosure.

FIG. 3 is a drawing of an example of a third computing system according to various embodiments of the present disclosure.

FIG. 4 is a flowchart illustrating an example of functionality implemented by a host device in the third computing system of FIG. 3 according to various embodiments of the present disclosure.

FIG. 5 is a flowchart illustrating an example of functionality implemented by a peripheral device in the third computing system of FIG. 3 according to various embodiments of the present disclosure.

FIG. 6 is a flowchart illustrating an example of functionality implemented by a peripheral device in the third computing system of FIG. 3 according to various embodiments of the present disclosure.

FIG. 7 is a flowchart illustrating an example of functionality implemented by a host device in the third computing system of FIG. 3 according to various embodiments of the present disclosure.

### DETAILED DESCRIPTION

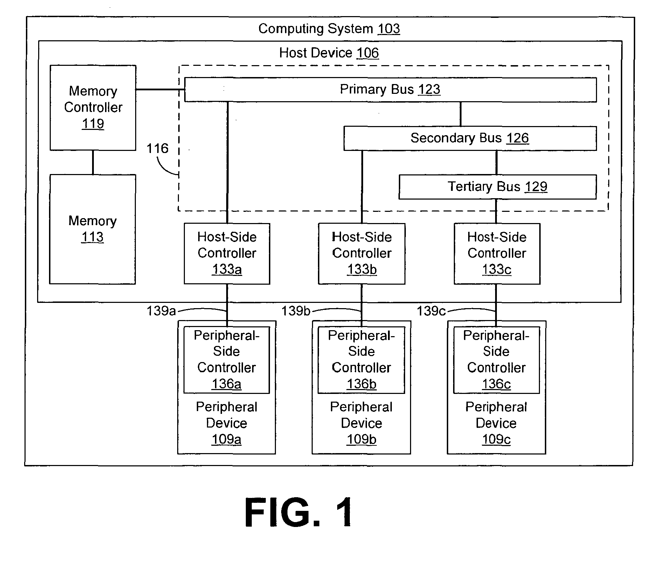

The present disclosure is directed towards facilitating communication between multiple devices in a computing system. With reference to FIG. 1, shown is an example of a portion of a computing system 103 according to various embodiments of the present disclosure. The computing system 103 may be one or more devices that perform various computing processing functions. As non-limiting examples, the computing system 103 may be embodied in the form of a desktop computer, a server computer, a laptop computer, a tablet computer, a mobile phone, a music player, a television, a set top box, an electronic book reader, or any other type of device that provides computing capabilities.

The computing system 103 may comprise a host device 106 in communication with one or more peripheral devices 109a-109c. The host device 106 may comprise, for example, a system on a chip (SoC), a microcontroller, or any other type of device that acts as a host to the peripheral devices 109a-109c. The host device 106 in the present example includes memory 113, an internal bus fabric 116, a memory controller 119, and other components that are not discussed in detail herein for brevity.

The memory 113 may store data for the computing system 103. According to various embodiments, the memory 113 may include volatile memory and/or nonvolatile memory. As such, the memory 113 may include random access memory (RAM), read-only memory (ROM), and/or any other type of memory technology. Although the memory 113 is shown as being a single component, it is understood that the memory 113 may include multiple components of the same or of different types of memory technologies. According to various embodiments, the memory 113 may be manufactured on the same chip as one or more of the other components in the host device 106.

The bus fabric 116 facilitates the transfer of data between components in the host device 106. For instance, the bus fabric 116 may facilitate the transfer of data between the memory 113 and a processor (not shown). Additionally, the bus fabric 116 may facilitate the transfer of data between the host device 106 and one or more of the peripheral devices 109a-109c.

The bus fabric 116 may include one or more busses on which the data may travel. In the embodiment shown in FIG. 1, the bus fabric 116 includes a primary bus 123, a secondary bus 126, and a tertiary bus 129. However, it is understood that in alternative embodiments, the bus fabric 116 may include fewer or greater numbers of busses. The primary bus 123, the secondary bus 126, and/or the tertiary bus 129 may be based at least in part on a bus protocol. Non-limiting examples of a bus protocol may be, for example, an ARM^{®} AXI bus protocol, a Sonics^{®} OCP2 bus protocol, or any other type of suitable bus protocol.

The primary bus 123, the secondary bus 126, and the tertiary bus 129 may each comprise an address bus, a data bus, and/or a control bus. Additionally, the respective address busses, data busses, and/or control busses may be shared. In such a case, transactions on the shared bus(ses) may include an address phase and a data phase, for example. Additionally, the primary bus 123, the secondary bus 126, and/or the tertiary bus 129 may include one or more channel controllers that arbitrate transactions on the bus fabric 116.

The secondary bus 126 may be coupled to the primary bus 123 via a fabric switch (not shown), a hub (not shown), an extender (not shown) or any other type of subsystem that facilitates coupling the secondary bus 126 to the primary bus 123. Similarly, the tertiary bus 129 may be coupled to the secondary bus 126, and thus the primary bus 123, via a fabric switch (not shown), a hub (not shown), an extender (not shown) or any other type of subsystem that facilitates coupling the tertiary bus 129 to the secondary bus 126. By the bus fabric 116 including multiple fabric layers (*e.g*., the primary bus 123, the secondary bus 126, the tertiary bus 129), several peripheral devices 109a-109c may be coupled to the host device 106 while meeting desired performance characteristics for the peripheral devices 109a-109c and/or the host device 106.

The memory controller 119 may facilitate and control transferring data between the memory 113, the bus fabric 116, and potentially other components. For example, the memory controller 119 may manage read and write operations for the memory 113. Additionally, the memory controller 119 may arbitrate access to the memory 113. According to various embodiments, the memory controller 119 may be manufactured on the same chip as one or more of the other components in the host device 106.

The peripheral devices 109a-109c may be devices that are coupled to the host device 106 and that are at least partially dependent upon the host device 106. For example, the peripheral devices 109a-109c may be devices that are external to the host device 106. In this regard, the components in the peripheral devices 109a-109c may be manufactured on chips or in packages that are separate from the host device 106. Although three peripheral devices 109a-109c are shown as being in communication with the host device 106, it is understood that that computing systems 103 in alternative embodiments may comprise fewer or greater numbers of peripheral devices 109a-109c. The peripheral devices 109a-109c may provide various types of functionality for the computing system 103. As non-limiting examples, one or more of the peripheral devices 109a-109c may be embodied in the form of a Peripheral Component Interconnect express (PCIe) device (*e.g*., a Graphics Processing Unit (GPU) card, an Ethernet controller, *etc*.), a Universal Serial Bus (USB) device, a Serial ATA (SATA) device, a JEDEC Universal Flash Storage (UFS) device, an Embedded Multimedia Card (eMMC) device, a Secure Digital (SD) device, a camera sensor, a display driver, or any other type of device that may be coupled to the host device 106.

The peripheral devices 109a-109c may be coupled to the host device 106 via respective external interfaces 139a-139c. In this regard, the external interfaces 139a-139c are interfaces that are external to the host device 106. According to various embodiments, the external interfaces 139a-139c may be embodied in the form of, for example, printed circuit board (PCB) traces, wires, lines, or any other conductive medium, or any combination thereof. The external interfaces 139a-139c may comprise serial, parallel, and/or any other type of interface according to various embodiments of the computing system 103.

In order to facilitate communication between the host device 106 and the respective peripheral devices 109a-109c, host-side controllers 133a-133c and peripheral-side controllers 136a-136c may be associated with the peripheral devices 109a-109c. In the present embodiment, the host-side controllers 133a-133c are located on the host device 106, and the peripheral-side controllers 136a-136c are located on the peripheral devices 109a-109c. The host-side controllers 133a-133c may be "memory mapped." In this regard, the host-side controllers 133a-133c may be assigned respective addresses, and communication with a particular one of the host-side controllers 133a-133c may be distinguished using the corresponding assigned address.

In the embodiment shown in FIG. 1, the host-side controllers 133a-133c, which are located in the host device 106, are coupled to the respective peripheral-side controllers 136a-136c, which are located in the peripheral devices 109a-109c. Whether the particular peripheral-side controllers 136a-136c are coupled directly to the primary bus 123, the secondary bus 126, the tertiary bus 129, or any other bus may be determined based at least in part on the bandwidth, latency, and possibly other design criteria for the particular peripheral devices 109a-109c.

The host-side controllers 133a-133c may operate in conjunction with the peripheral-side controllers 136 to facilitate the host device 106 controlling and interacting with the corresponding peripheral devices 109a-109c. According to various embodiments, one or more of the host-side controllers 133a-133c may be embodied in the form of, for example but not limited to, a PCIe root complex, a USB host controller, a SATA controller, a JEDEC Universal Flash Storage Host Controller Interface (UFSHCI), an eMMC host controller, an SD host controller, or any other type of suitable host-side controller 133a-133c.

The peripheral-side controllers 136a-136c correspond to the respective host-side controllers 133a-133c. As such, one or more of the peripheral-side controllers 136a-136c may be embodied in the form of, for example but not limited to, a PCIe endpoint, a USB endpoint, a SATA controller, a JEDEC UFS controller, an eMMC device controller, an SD device controller, or any other type of suitable peripheral-side controller 136a-136c.

Because the host-side controllers 133a-133c are located in the host device 106 in the embodiment of FIG. 1, several types of different host-side controllers 133a-133c may be provided on the host device 106 in order to provide compatibility for several types of peripheral devices 109a. However, it may be the case that only a relatively small number of the several types of host-side controllers 133a-133c are used in an actual application. Furthermore, the host-side controllers 133a may be designed to include modes and features that are not used in some applications. Thus, efforts in design, efforts in validation, and space on a chip may go unused if the host-side controllers 133a are manufactured on the same chip as the host device 106 and if one or more of the host-side controllers 133a-133c and/or features or modes associated therewith are not used in an application.

Additionally, the peripheral devices 109a-109c may be associated with protocols that are updated from time to time. For instance, eMMC version 4.5 may be superseded by eMMC version 4.51, JEDEC UFS 1.0 may be superceded by 1.1, *etc.* By including the host-side controllers 133a-133c on the host device 106, the host device 106 may lack compatibility with future types or versions of peripheral devices 109a-109c. Additionally, efforts in design, efforts in validation, and space on a chip may go unused if the peripheral devices 109a-109c for an application do not incorporate all of the different versions of a protocol supported by one or more of the host-side controllers 133a-133c.

Additionally, the peripheral-side controllers 136a-136c and the host-side controllers 133a may be designed by different entities that may not coordinate with each other to optimize functionality between the host-side controllers 133a-133c and the peripheral-side controllers 136a-136c. As such, operation between the host-side controllers 133a-133c and the peripheral side controllers 136a-136c may not be optimized if the host-side controllers 133a-133c are located on the host device 106.

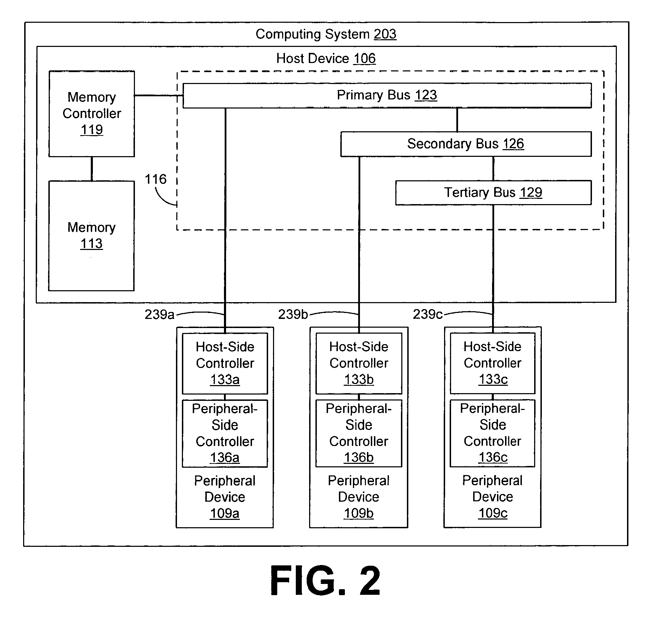

Turning now to FIG. 2, shown is an example of a portion of a second computing system 103, referred to as the computing system 203 according to various embodiments of the present disclosure. The computing system 203 is similar to the computing system 103 previously discussed with reference to FIG. 1. In particular, the peripheral devices 109a-109c are in communication with the host device 106. However, in the computing system 203, the host-side controllers 133a-133c are located on the respective peripheral devices 109a-109c, instead of being located on the host device 106.

For the computing system 203, the host device 106 is in communication with the peripheral devices 109a-109c via external interfaces 239a-239c. The external interfaces 239a-239c may be interfaces that are external to the host device 106. Also, the external interfaces 239a-239c may be regarded as "extending" the bus fabric 116 outside of the host device 106. In this regard, the external interfaces 239a-239c may facilitate the peripheral devices 109a-109c being in direct communication with the bus fabric 116. According to various embodiments, the external interfaces 239a-239c may be embodied in the form of, for example, printed circuit board (PCB) traces, wires, lines, any other conductive medium, or any combination thereof.

The host-side controllers 133a-133c, which are located in the respective peripheral devices 109a-109c in FIG. 2, may be in direct communication with the bus fabric 116 via the external interfaces 239a-239c. According to various embodiments, the host-side controllers 133a-133c may or may not be located on the same chip as the peripheral-side controllers 136a-136c.

By having the host-side controllers 133a-133c located on the peripheral devices 109a-109c, space, costs, and power consumption for the host device 106 may be reduced. Additionally, the host-side controllers 133a-133c and the peripheral-side controllers 136a-136c may be designed to take advantage of the fact that both the host-side controllers 133a-133c and the peripheral-side controllers 136a-136c are located on the peripheral devices 109a-109c. For instance, the host-side controllers 133a-133c and the peripheral-side controllers 136a-136c may be designed to omit features that are not utilized by the peripheral devices 109a-109c. As such, cost, space and power consumption on the peripheral devices 109a-109c may also be reduced by having the host-side controllers 133a-133c on the peripheral devices 109a-109c.

However, the bus fabric 116 may comprise a relatively large number of signal lines with various signal speeds and widths. As such, the external interfaces 239a-239c between the host device 106 and the peripheral devices 109a-109c may be relatively complex and have a relatively large number of signal lines. Additionally, because there are different protocols for different types of bus fabrics 116, the peripheral devices 109a-109c may not be compatible with different types of bus fabrics 116.

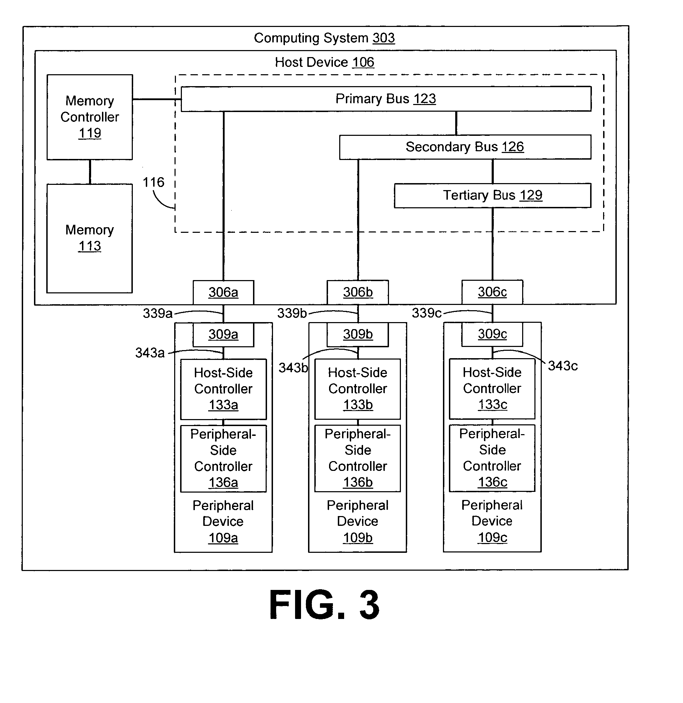

Turning now to FIG. 3, shown is an example of a portion of a third computing system 103, referred to herein as the computing system 303, according to various embodiments of the present disclosure. The computing system 303 is similar to the computing system 203 previously discussed with reference to FIG. 2. The host-side controllers 133a-136c and the peripheral-side controllers 136a-136c are located on their respective peripheral devices 109a-109c. However, the computing system 303 also comprises host-side translators 306a-306c and peripheral-side translators 309a-309c in communication via external interfaces 339a-339c.

The external interfaces 339a-339c may be embodied in the form of one or more PCB traces, wires, lines, or any other type of conductive medium. In addition, one or more of the external interfaces 339a-339c may be a serial interface, a parallel interface, or any other type of interface and may be unidirectional, bidirectional, half-duplex, or full-duplex, for example. Additionally, one or more of the external interfaces 339a-339c may be based at least in part on a predefined bus protocol. As non-limiting examples, one or more of the external interfaces 339a-339c may be based at least in part on a MIPI^{®} Low Latency Interface (LLI) bus protocol, a PCIe bus protocol, any other suitable protocol, or any combination thereof. According to various embodiments, all of the external interfaces 339a-339c may be associated with the same type of bus protocol. Alternatively, one or more of the external interfaces 339a-339c may be associated with different types of bus protocols.

Each of the external interfaces 339a-339c may include one or more lanes on which data may travel between the host device 106 and the peripheral devices 109a-109c. In some embodiments, characteristics for one or more of the lanes may be configurable. For instance, the data rate(s), bit width, and/or other characteristics for one or more of the lanes may be configured by the host device 106 and/or the peripheral devices 109a-109c. Additionally, the number of total lanes and/or the number of lanes for each of the external interfaces 339a-339c may be configurable by the host device 106 and/or the peripheral devices. Furthermore, in various embodiments, the total number of lanes for the external interfaces 339a-339c may be set during the design of the host device 106, and the particular allocation of the predetermined number of lanes for each respective external interface 339a-339c may be configured by the host device 106 and/or the peripheral devices 109a-109c.

Each of the host-side translators 306a-306c may be configured to receive data from the bus fabric 116 and to provide the data to the respective one of the external interfaces 339a-339c for the host device 106. To this end, the host-side translators 306a-306c may have knowledge of the assigned addresses for their respective host-side controllers 133a-133c. As such, each of the host-side translators 306a-306c may recognize whether data on the bus fabric 116 that is provided in conjunction with a particular address is intended to be transmitted to their corresponding host-side controllers 133a-133c.

The host-side translators 306a-306c may also convert the data to be in accordance with a bus protocol for the external interfaces 339a-339c. For example, the host-side translators 306a-306c may serialize data, deserialize data, perform data sequencing, perform level shifting, and/or perform other formatting tasks. As non-limiting examples, one or more of the host-side translators 306a-306c may receive data being in accordance with an ARM^{®} AXI bus protocol, a Sonics^{®} OCP2 bus protocol, or any other suitable protocol, and translate the data to be in accordance with an MIPI^{®} LLI bus protocol, a PCIe bus protocol, or any other suitable protocol.

Each of the peripheral-side translators 309a-309c may be configured to receive data from the respective external interfaces 339a-339c and to provide the data to the respective host-side controllers 133a-133c via internal busses 343a-343c in the peripheral devices 109a-109c. The internal busses 343a-343c may carry the data from the peripheral-side translators 309a-309c to the respective host-side controllers 133a-133c and/or possibly other components in the peripheral devices 109a-109c. To this end, the internal busses 343a-343c may be embodied in the form of, for example but not limited to, one or more PCB traces, wires, lines, on-chip interconnect, metallization layers, or any other type of medium through which data may travel. One or more of the internal busses 343a-343c may be based at least in part on a predefined bus protocol. According to various embodiments, the internal busses 343a-343c may be associated with the same bus protocol as the bus protocol for the bus fabric 116. Alternatively, the internal busses 343a-343c may be associated with one or more bus protocols that are different from the bus protocol for the bus fabric 116. As non-limiting examples, one or more of the internal busses 343a-343c may be based at least in part on an ARM^{®} AXI bus protocol, a Sonics^{®} OCP2 bus protocol, or any other suitable bus protocol.

Next, a general description of the operation of various components in the computing system 303 is provided. In the following example, data transfer between the host device 106 and the peripheral device 109a is discussed. Data transfer between the host device 106 and the other peripheral devices 109b-109c may be performed in a similar manner as that which will be described for the peripheral device 109a.

Data may be provided to the host-side translator 306a via the bus fabric 116. To this end, the data may be transmitted in conjunction with an assigned address for the peripheral device 109a. In this regard, the address assigned to the host-side controller 133a may be provided on the primary bus 123 during the address phase of the data transaction, followed by the data for the host-side controller 133a being provided during the data phase of the data transaction. In alternative embodiments, the address for the host-side controller 133a may be asserted on an address bus of the primary bus 123, and the data may be provided on a data bus for the primary bus 123.

Because the host-side translator 306a has knowledge of the address assigned to the host-side controller 133a, the host-side translator 306a may recognize the address provided by the bus fabric 116 and know to obtain the associated data. Upon obtaining the data, the host-side translator 306a may store the data in a register or a cache accessible to the host-side translator 306a.

Upon obtaining the data from the bus fabric 116, the host-side translator 306a may translate the data so that it is in a format in accordance with the bus protocol for the external interface 339a. For example, the host-side translator 306a may serialize the data, deserialize the data, reorder the data, perform level shifting and/or perform other formatting functions. As a non-limiting example, the data may be converted from being in accordance with an ARM^{®} AXI bus protocol, a Sonics^{®} OCP2 bus protocol, or any other bus protocol, to being in accordance with the MIPI^{®} LLI bus protocol, the PCIe bus protocol, or any other type of bus protocol. After the data has been converted to be compatible with the external interface 339a, the host-side translator 306a may provide the data to the external interface 339a.

Once the data is provided to the external interface 339a, the peripheral-side translator 309a may obtain the data from the external interface 339a. The peripheral-side translator 309a may then translate the data so that it is in accordance with the bus format associated with the internal bus 343a. For example, the peripheral-side translators 309a-309c may serialize data, deserialize data, perform data sequencing, perform level shifting and/or perform other formatting tasks. As non-limiting examples, the data may be converted from being in accordance with the MIPI^{®} LLI bus protocol, the PCIe bus protocol, or any other type of bus protocol to being in accordance with an ARM^{®} AXI bus protocol, a Sonics^{®} OCP2 bus protocol, or any other type of bus protocol. After the data has been converted to be compatible with the internal bus 343a, the peripheral-side translator 309a may then provide the data to the internal bus 343a in the peripheral device 109a.

Thereafter, the host-side controller 133a, which is located in the peripheral device 109a, may obtain the data being provided on the internal bus 343a. The host-side controller 133a may then operate in conjunction with the peripheral-side controller 136a to facilitate the host device 106 interacting with the peripheral device 109a. From the perspective of the components in the host device 106 that initiate the data transactions with the peripheral device 109a, it may appear that the host-side controller 133a is coupled directly to the bus fabric 116. In this regard, data may be transferred to the host-side controller 133a as if it were a memory mapped component that were coupled directly to the bus fabric 116.

In order to transfer data from the host-side controller 133a to the host device 106, the host-side controller 133a may provide the data on the internal bus 343a. The peripheral-side translator 309a may then obtain the data from the internal bus 343a and translate the data to be in accordance with the bus protocol associated with the external interface 339a. For example, the peripheral-side translator 309a may serialize data, deserialize data, perform data sequencing, perform level shifting and/or perform other formatting tasks. As non-limiting examples, the data may be converted from being in accordance with an ARM^{®} AXI bus protocol, a Sonics^{®} OCP2 bus protocol, or any other protocol to being in accordance with the MIPI^{®} LLI bus protocol, the PCIe bus protocol, or any other type of protocol. The converted data may then be provided to the external interface 339a.

The host-side translator 306a may then obtain the data from the external interface 339a and translate the data to a format that is in accordance with a bus protocol associated with the bus fabric 116. For example, the peripheral-side translator 309a may serialize data, deserialize data, perform data sequencing, perform level shifting, and/or perform other formatting tasks. As non-limiting examples, the data may be converted from being in accordance with the MIPI^{®} LLI bus protocol, the PCIe bus protocol, or any other protocol to being in accordance with an ARM^{®} AXI bus protocol, the Sonics^{®} OCP2 bus protocol, or any other type of bus protocol. The converted data may then be provided to the bus fabric 116 for further processing.

From the perspective of the host-side controller 133a, the host-side controller 133a may appear to be coupled directly to the bus fabric 116. In this regard, data between the host-side controller 133a and the host device 106 may be transferred between the host device 106 and the host-side controller 133a as if the host-side controller 133a were a memory mapped component coupled directly to the bus fabric 116.

Because the host-side translators 306a-306c and the peripheral-side translators 306a-306c translate data for communication between the host device 106 and the host-side controllers 133a-133c, the host device 106 may be compatible with any type of peripheral device 109a-109c that has a suitable peripheral-side translator 309a-309c. Additionally, software interactions between the host device 106 and the peripheral devices 109a-109c may be transparent. In this sense, software that was developed for the computing system 103 (FIG. 1) may be compatible with the computing system 303 without modification to the software.

By having the host-side controllers 133a-133c located on the peripheral devices 109a-109c, space, costs, and power consumption for the host device 106 may be reduced. Additionally, the host-side controllers 133a-133c and the peripheral-side controllers 136a-136c may be designed to take advantage of the fact that both the host-side controllers 133a-133c and the peripheral-side controllers 136a-136c are located on the peripheral devices 109a-109c. For instance, the host-side controllers 133a-133c and the peripheral-side controllers 136a-136c may be designed to omit features that are not utilized by the peripheral devices 109a-109c. Additionally, during operation of the host device 106, some features in the peripheral devices 109a-109c may be bypassed in order to reduce communication latency. For example, because the host-side controllers 136a-136c are located on their respective peripheral devices 109, one or more layers between the host-side controllers 133a-133c and the peripheral-side controllers 136a-136c may be omitted or bypassed. As a non-limiting example, the physical layer (PHY) between the host-side controllers 133a-133c and the peripheral-side controllers 136a-136c may be omitted in the design or bypassed during operation of the computing system 303. As a result, lower costs, power consumption, and communication latency for the computing system 303 may be realized.

Furthermore, operations in the computing system 303 may be optimized by having the host-side controllers 133a-133c located on the peripheral device and by having the host-side translators 306a-306c and the peripheral-side translators 309a-309c facilitate communication between the peripheral devices 109a-109c and the host device 106. For example, in a conventional eMMC bus, a host may not have knowledge of the execution status of a command or a packed command for a peripheral. Furthermore, the host for a conventional eMMC bus may not be able to issue additional commands until the peripheral indicates a completion or error status. However, by having the host-side controllers 133a-133c and the peripheral-side controllers 136a-136c located in the respective peripheral devices 109a-109c, the host-side controllers 133a-133c may be configured to probe directly into the respective co-located peripheral-side controllers 136a-136c to determine execution statuses and to optimize processing.

Additionally, a conventional eMMC bus may use a half-duplex communication protocol where an error status is communicated at particular time slots. In various embodiments of the present disclosure, the peripheral devices 109a-109c may provide an additional signal path between the respective host-side controllers 133a-133c and the peripheral-side controllers 133a-133c so that error signals and/or other types of signals can be communicated between the respective host-side controllers 133a-133c and the peripheral-side controllers 136a-136c. For example, in various embodiments, the additional signal path may be dedicated to communicating error signals.

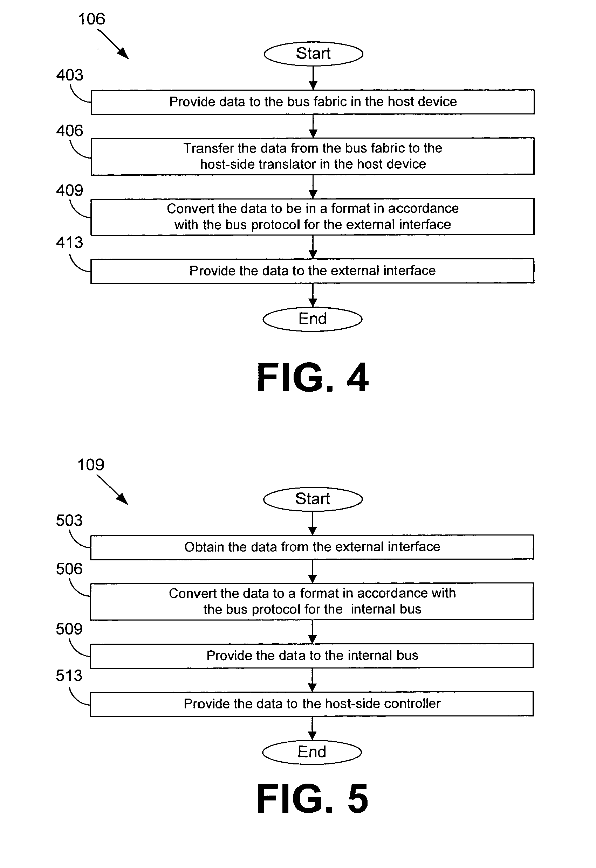

Referring next to FIG. 4, shown is a flowchart illustrating an example of functionality implemented by the host device 106 (FIG. 3) according to various embodiments of the present disclosure. In particular, the flowchart of FIG. 4 illustrates an example of providing data from the bus fabric 116 (FIG. 3) to one of the external interfaces 339a-339c (FIG. 3), referred to herein as the external interface 339. It is understood that the flowchart of FIG. 4 provides merely an example of the many different types of functionality that may be implemented by the host device 106 as described herein. Additionally, the flowchart of FIG. 4 may be viewed as depicting an example of steps of a method implemented in the computing system 303 according to one or more embodiments.

At reference number 403, the data is provided to the bus fabric 116 in the host device 106. To this end, a processor or other component, for example, may initiate the process of providing the data to the bus fabric 116. The data may be in accordance with a bus protocol for the bus fabric 116, such as but not limited to an ARM^{®} AXI bus protocol, a Sonics^{®} OCP2 bus protocol, or any other type of bus protocol. The data may be from the memory 113 (FIG. 3) or from another component associated with the host device 106.

Next, the data is transferred from the bus fabric 116 to one of the host-side translators 306a-306c (FIG. 3), referred to herein as the host-side translator 306, as indicated at reference number 406. The data is then converted to be in a format that is in accordance with the bus protocol for the respective one of the external interfaces 339a-339c (FIG. 3), referred to herein as the external interface 339, as shown at reference number 409. For example, the data may be converted to be in accordance with a bus protocol associated with the external interface 339, such as the MIPI^{®} LLI bus protocol, the PCIe bus protocol, or any other suitable type of bus protocol. To this end, the host-side translator 306 may, for example, serialize the data, deserialize the data, perform data ordering, perform level shifting, or perform any other type of formatting function. The host-side translator 306 then provides the data to the external interface 339, as indicated at reference number 413. Thereafter, the process ends.

Referring next to FIG. 5, shown is a flowchart illustrating an example of functionality implemented by one of the peripheral devices 109a-109c (FIG. 3), referred to herein as the peripheral device 109, according to various embodiments of the present disclosure. In particular, the flowchart of FIG. 5 illustrates an example of provided data from one of the external interfaces 339a-339c (FIG. 3), referred to herein as the external interface 339, to the corresponding one of the host-side controllers 133a-133c (FIG. 3), referred to herein as the host-side controller 133. It is understood that the flowchart of FIG. 5 provides merely an example of the many different types of functionality that may be implemented by the peripheral device 109 as described herein. Additionally, the flowchart of FIG. 5 may be viewed as depicting an example of steps of a method implemented in the computing system 303 according to one or more embodiments.

At reference number 503, the data from the external interface 339 is obtained. For example, one of the peripheral-side translators 309a-309c (FIG. 3), referred to herein as the peripheral-side translator 309, may obtain the data from the external interface 339. Next, the data is converted to be in a format that is in accordance with the bus protocol for the respective one of the internal busses 343a-343c (FIG. 3), referred to herein as the internal bus 343, as indicated at reference number 506. As non-limiting examples, the peripheral-side translator 309 may convert the data from being in accordance with the MIPI^{®} LLI bus protocol, the PCIe bus protocol, or any other type of protocol to being in accordance with an ARM^{®} AXI bus protocol, the Sonics^{®} OCP2 bus protocol, or any other type of bus protocol. As shown as reference number 509, the data is then provided to the internal bus 343 for the peripheral device 109, and the data is provided to the host-side controller 133, as shown at reference number 513. Thereafter, the process ends.

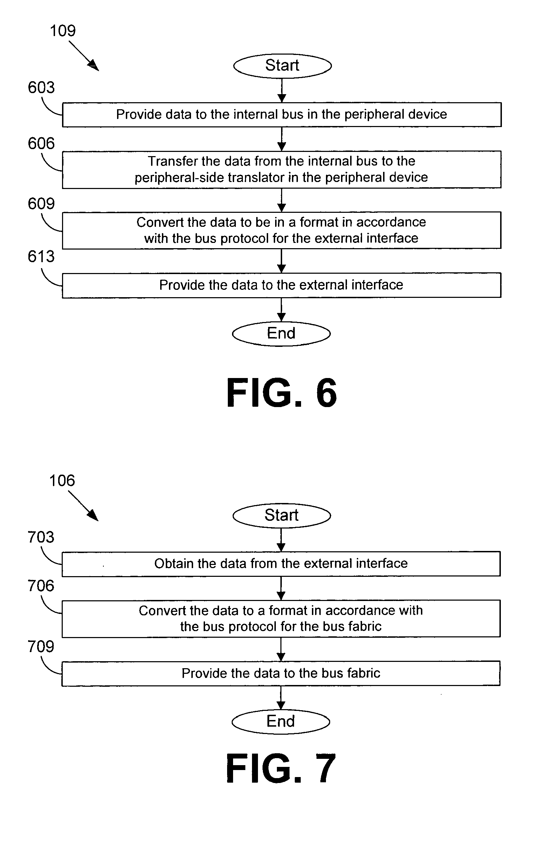

Referring next to FIG. 6, shown is a flowchart illustrating an example of functionality implemented by one of the peripheral devices 109a-109c (FIG. 3), referred to herein as the peripheral device 109, according to various embodiments of the present disclosure. In particular, the flowchart of FIG. 6 illustrates an example of providing data from one of the internal busses 343a-343c (FIG. 3), referred to herein as the internal bus 343, to one of the external interfaces 339a-339c (FIG. 3), referred to herein as the external interface 339. It is understood that the flowchart of FIG. 6 provides merely an example of the many different types of functionality that may be implemented by the peripheral device 109. Additionally, the flowchart of FIG. 6 may be viewed as depicting an example of steps of a method implemented in the computing system 303 according to one or more embodiments.

At reference number 603, the data is provided to the internal bus 343 in the peripheral device 109. To this end, one of the host-side controllers 133a-133c (FIG. 3), referred to herein as the host-side controller 133, may provide the data to the internal bus 343. The data may be in accordance with a bus protocol for the internal bus 343, such as but not limited to an ARM^{®} AXI bus protocol, a Sonics^{®} OCP2 bus protocol, or any other type of bus protocol.

Next, the data is transferred from the internal bus 343 to the corresponding one of the peripheral-side translators 309a-309c (FIG. 3), referred to herein as the peripheral-side translator 309, as indicated at reference number 606. The data is then converted to be in a format that is in accordance with the bus protocol for the respective one of the external interfaces 339a-339c (FIG. 3), referred to herein as the external interface 339, as shown at reference number 609. For example, the data may be converted to be in accordance with the MIPI® LLI bus protocol, the PCIe bus protocol, or any other suitable type of bus protocol. To this end, the peripheral-side translator 309 may, for example, serialize the data, deserialize the data, perform data ordering, perform level shifting, or perform any other type of formatting function. The peripheral-side translator 309 then provides the data to the external interface 339, as indicated at reference number 613. Thereafter, the process ends.

Referring next to FIG. 7, shown is a flowchart illustrating an example of functionality implemented by the host device 106 (FIG. 3) according to various embodiments of the present disclosure. In particular, the flowchart of FIG. 7 illustrates an example of providing data from one of the external interfaces 339a-339c (FIG. 3), referred to herein as the external interface 339, to the bus fabric 116. It is understood that the flowchart of FIG. 7 provides merely an example of the many different types of functionality that may be implemented by the host device 106 as described herein. Additionally, the flowchart of FIG. 7 may be viewed as depicting an example of steps of a method implemented in the computing system 303 according to one or more embodiments.

At reference number 703, the data from the external interface 339 is obtained. For example, one of the host-side translators 306a-306c (FIG. 3), referred to herein as the host-side translator 306, may obtain the data from the external interface 339. Next, the data is converted to be in a format that is in accordance with the bus protocol for the bus fabric 116, as indicated at reference number 706. As non-limiting examples, the host-side translator 306 may convert the data from being in accordance with the MIPI^{®} LLI bus protocol, the PCIe bus protocol, or any other bus protocol to being in accordance with an ARM^{®} AXI bus protocol, a Sonics^{®} OCP2 bus protocol, or any other type of bus protocol. As shown as reference number 709, the data is then provided to the bus fabric 116 for the host device 106. Thereafter, the process ends.

Although the flowcharts of FIGS. 4-7 show a specific order of execution, it is understood that the order of execution may differ from that which is depicted. For example, the order of execution of two or more blocks may be scrambled relative to the order shown. Also, two or more items shown in succession may be executed concurrently or with partial concurrence. Further, in some embodiments, one or more of the items shown may be skipped or omitted. In addition, any number of elements might be added to the logical flow described herein, for purposes of enhanced utility, accounting, performance measurement, or providing troubleshooting aids, *etc*. It is understood that all such variations are within the scope of the present disclosure.

The components described herein may be implemented by circuitry. In this regard, such circuitry may be arranged to perform the various functionality described above by generating and/or responding to electrical or other types of signals. The circuitry may be general purpose hardware or hardware that is dedicated to performing particular functions. The circuitry may include, but is not limited to, discrete components, integrated circuits, or any combination of discrete components and integrated circuits. Such integrated circuits may include, but are not limited to, one or more microprocessors, system-on-chips, application specific integrated circuits, digital signal processors, microcomputers, central processing units, programmable logic devices, state machines, other types of devices, and/or any combination thereof. As used herein, the circuitry may also include interconnects, such as lines, wires, traces, metallization layers, or any other element through which components may be coupled. Additionally, the circuitry may be configured to execute software to implement the functionality described herein.

It is emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A system, comprising:
a host device comprising:
a bus fabric associated with a first bus protocol; and
a host-side translator in communication with the bus fabric, the host-side translator configured to provide data from the bus fabric to an external interface for the host device, the external interface being associated with a second bus protocol; and
a peripheral device comprising:
a peripheral-side translator in communication with the external interface, the peripheral-side translator configured to provide data from the external interface to an internal bus in the peripheral device, the internal bus being associated with a third bus protocol; and
a host-side controller configured to obtain data from the internal bus.

2. The system of claim 1, wherein the peripheral device further comprises a peripheral-side controller for the peripheral device, the peripheral-side controller being in communication with the host-side controller.

3. The system of claim 1 or 2, wherein:
the host-side translator is configured to convert the data from being in accordance with the first bus protocol to being in accordance with the second bus protocol; and
the peripheral-side translator is configured to convert the data from being in accordance with the second bus protocol to being in accordance with the third bus protocol.

4. The system of any preceding claim, wherein:
the host device comprises an additional host-side translator in communication with the bus fabric, the additional host-side translator configured to provide data to an additional external interface for the host device, the additional external interface being associated with the second bus protocol; and
the system comprises an additional peripheral device comprising:
an additional peripheral-side translator in communication with the additional external interface, the additional peripheral-side translator configured to provide data from the additional external interface to an additional internal bus in the additional peripheral device.

5. The system of any preceding claim, wherein the external interface comprises a plurality of configurable lanes.

6. The system of any preceding claim, wherein the host device is located on a first chip and the peripheral device is located on a second chip.

7. The system of any preceding claim, wherein the first bus protocol and the third bus protocol are the same.

8. The system of any preceding claim, wherein the first bus protocol and the third bus protocol are different.

9. The system of any preceding claim, wherein the second bus protocol is based at least in part on a MIPI Low Latency Interface (LLI) protocol, a Peripheral Component Interconnect (PCI) protocol, or any combination thereof.

10. A method, comprising:
transferring, using a host device, data from a bus fabric in the host device to an external interface for the host device, the bus fabric being associated with a first bus protocol, the external interface being associated with a second bus protocol;
transferring, using a peripheral device, data from the external interface to an internal bus for the peripheral device, the internal bus being associated with a third bus protocol; and
transferring, in the peripheral device, data from the internal bus to a host-side controller that is located in the peripheral device.

11. The method of claim 10, further comprising translating, in the host device, data from being in accordance with the first bus protocol to being in accordance with the second bus protocol.

12. The method of claim 10 or 11, further comprising translating, in the peripheral device, data from being in accordance with the second bus protocol to being in accordance with the third bus protocol.

13. The method of any of claims 10 to 12, further comprising communicating with the host-side controller using a peripheral-side controller that is located in the peripheral device.

14. The method of any of claims 10 to 13, wherein the first bus protocol and the third bus protocol are different from the second bus protocol.

15. An apparatus, comprising:
a peripheral-side controller;
a host-side controller in communication with the peripheral-side controller;
an internal bus in communication with the host-side controller, the internal bus being associated with a first bus protocol; and
a peripheral-side translator configured to transfer data from the internal bus to an external interface, the external interface being associated with a second bus protocol.
